# EUROPEAN PATENT SPECIFICATION

(11) **EP 3 457 398 B1**
(45) Date of publication and mention of the grant of the patent: **15.09.2021**
(21) Application number: 16901780.3
(22) Date of filing: 10.10.2016
(51) Int. Cl.: G10L 15/20, G10L 15/22, H04R 19/04, G10L 15/06

(54) **ELECTRONIC DEVICE**
ELEKTRONISCHE VORRICHTUNG UND STEUERUNGSVERFAHREN DAFÜR
DISPOSITIF ÉLECTRONIQUE ET SON PROCÉDÉ DE COMMANDE

(30) Priority: 13.05.2016 KR 20160058610
(43) Date of publication of application: 20.03.2019
(73) Proprietor: LG Electronics Inc., Seoul 07336 (KR)
(72) Inventor: LEE, Byounggi, Seoul 06772 (KR); JEON, Hyejeong, Seoul 06772 (KR)
(74) Representative: Ter Meer Steinmeister & Partner
(86) International application number: PCT/KR2016/011320
(87) International publication number: WO 2017/195946

(56) References cited:
- WO-A1-2012/096072
- JP-A- H0 667 691
- JP-Y2- S6 237 279
- KR-A- 20080 038 038
- KR-A- 20140 135 349
- US-A1- 2005 195 989
- US-A1- 2013 114 822
- US-A1- 2013 282 370
- US-A1- 2015 380 011

## Description

### TECHNICAL FIELD

The present invention relates to an electronic device. Although the present invention is suitable for a wide scope of applications, it is particularly suitable for performing a function or operation in response to a voice command inputted through a microphone.

### BACKGROUND ART

A device configured to behave by making self-decision according to a predetermined rule is called a robot. The robot may mean a device configured to simply performing a prescribed operation for itself or a device configured to operate based on a recognized information by self-recognizing a situation or environment.

Thus, a robot has been already capable of behaving by making a behavior plan of high level enough to exclude human intervention owing to the development of artificial intelligence and is currently used for various fields.

As a voice recognition function has been developed, a robot recognizes user's voice, responds to the recognized voice, and performs a function or operation according to a voice command.

When such a robot performs a specific function or operation such as a cleaning, a driving or the like, a noise can be generated. If a noise level is too high, since a robot fails to recognize user's voice command, the robot may fail to perform a function or operation according to the voice command or may perform an inappropriate function or operation.

Thus, the demand for the development of an electronic device capable of raising a recognition rate of a voice command by effectively eliminating notes generated from an outside or inside of a robot is increasingly rising.

US 2013/282370 A1 presents speech processing apparatus, control method thereof, storage medium storing control program thereof, and vehicle, information processing apparatus, and information processing system including the speech processing apparatus. The speech processing apparatus acquires pseudo speech from a mixture sound including desired speech and noise. The speech processing apparatus includes a first microphone that inputs a first mixture sound including desired speech and noise and outputs a first mixture signal, a second microphone that is opened to the same sound space as that of the first microphone, inputs a second mixture sound including the desired speech and the noise at a ratio different from the first mixture sound, and outputs a second mixture signal, a first sound collector including a concave surface that collects the first mixture sound to the first microphone, a second sound collector including a concave surface that collects the second mixture sound to the second microphone and disposed in a direction different from the first sound collector, and a noise suppression circuit that suppresses an estimated noise signal based on the first mixture signal and the second mixture signal and outputs a pseudo speech signal.

US 2013/114822 A1 presents an electronic device that comprises: a first microphone operative to receive audio signals from a first direction; a second microphone operative to receive audio signals from a second direction; and a controller operative to engage selectively the second microphone to receive ambient audio noise or to receive an audio input.

US 2015/380011 A1 presents a speech input apparatus, speech processing method, speech processing program, ceiling member, and vehicle. The speech input apparatus includes a sound insulating block attached to a ceiling member in a vehicle, a first microphone that is attached to a side surface of the sound insulating block or the ceiling member in the vicinity of the sound insulating block on a side close to a passenger of the vehicle, inputs a sound mixture including the voice of the passenger and noise in the vehicle, and outputs a first signal to a noise suppressor configured to output an enhanced speech signal, and a second microphone that is attached to a side surface of the sound insulating block or the ceiling member in the vicinity of the sound insulating block on a side far from the passenger, inputs the noise in the vehicle, and outputs a second signal to the noise suppressor.

### DISCLOSURE

### TECHNICAL PROBLEM

Accordingly, embodiments of the present invention are directed to an electronic device according to claim 1 that substantially obviates one or more problems due to limitations and disadvantages of the related art. One object of the present invention is to provide an electronic device by which a noise of a voice signal received from a voice obtaining microphone can be effectively eliminated by increasing a signal to noise ratio in a manner of disposing a noise obtaining microphone near a noise source.

Another object of the present invention is to provide an electronic device, by which a voice recognition rate can be raised in a manner of eliminating a noise of a voice signal having a smallest noise level in case of a presence of a multitude of voice obtaining microphones.

Another object of the present invention is to provide an electronic device, by which a voice recognition rate can be raised in a manner of estimating a noise of a voice signal at a highest noise level and then eliminating a noise of a voice signal received from a voice obtaining microphone in case of a presence of a multitude of voice obtaining microphones.

Another object of the present invention is to provide an electronic device, by which a noise of a voice signal can be eliminated in a manner of increasing a signal-to-noise ratio by rotating to move a noise obtaining microphone in a direction of a noise source having a greatest noise generated therefrom using a rotation frame having a noise obtaining microphone and the voice obtaining microphone disposed therein.

Further object of the present invention is to provide an electronic device, by which a noise of a voice signal can be eliminated in a manner of increasing a signal-to-noise ratio by rotating to move a noise obtaining microphone in a direction of a noise source having a noise generated therefrom due to vibration by disposing a vibration sensor.

Additional advantages, objects, and features of the invention will be set forth in the disclosure herein as well as the accompanying drawings. Such aspects may also be appreciated by those skilled in the art based on the disclosure herein.

### TECHNICAL SOLUTION

To achieve these objects and other advantages and in accordance with the purpose of the invention, as embodied and broadly described herein, an electronic device according to one embodiment of the present invention includes the features of claim 1.

### ADVANTAGEOUS EFFECTS

The effects of the electronic device according to the present invention are described as follows. The above objects are achieved by the subject-matter of the independent claim.

According to one of the embodiments of the present invention, the present invention can effectively eliminate a noise of a voice signal received from a voice obtaining microphone by increasing a signal to noise ratio in a manner of disposing a noise obtaining microphone near a noise source, thereby improving a remote voice recognition rate.

The present invention can raise a voice recognition rate in a manner of eliminating a noise of a voice signal having a smallest noise level in case of a presence of a multitude of voice obtaining microphones, thereby improving reliability on an execution operation according to a voice command.

The present invention can raise a voice recognition rate in a manner of estimating a nose of a voice signal at a highest noise level and then eliminating a noise of a voice signal received from a voice obtaining microphone in case of a presence of a multitude of voice obtaining microphones, thereby improving reliability on an execution operation according to a voice command.

The present invention can eliminate a noise of a voice signal in a manner of increasing a signal-to-noise ratio by rotating to move a noise obtaining microphone in a direction of a noise source having a greatest noise generated therefrom using a rotation frame having a noise obtaining microphone and the voice obtaining microphone disposed therein.

And, the present invention can eliminate a noise of a voice signal in a manner of increasing a signal-to-noise ratio by rotating to move a noise obtaining microphone in a direction of a noise source having a noise generated therefrom due to vibration by disposing a vibration sensor.

Although embodiments have been described with reference to a number of illustrative embodiments thereof, it should be understood that numerous other modifications and embodiments can be devised by those skilled in the art that will fall within the scope of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### DESCRIPTION OF DRAWINGS

FIG. 1 is a block diagram to describe an electronic device;
FIG. 2 is a block diagram for the configuration of an electronic device according to one embodiment of the present invention;
FIG. 3 is a perspective diagram of an electronic device;
FIG. 4 is a diagram to illustrate a microphone location of an electronic device;
FIG. 5 and FIG. 6 are diagrams of a noise obtaining microphone and a voice obtaining microphone of an electronic device;
FIG. 7 and FIG. 8 are diagrams to illustrate a shielding process of a voice obtaining microphone;
FIG. 9 is a diagram to describe a distance relation between a noise source and a microphone;
FIG. 10A and FIG. 10B are diagrams to describe a distance relation between microphones;
FIG. 11 and FIG. 12 are diagrams to describe an electronic device having a movable microphone according to the invention;
FIG. 13 is a diagram to illustrate a rotational movement of a microphone according to a noise level according to the invention;
FIG. 14 is a diagram to illustrate a movement of a noise obtaining microphone according to vibration;
FIG. 15A and FIG. 15B are diagrams to show a disposition of a microphone applicable to a movable home robot; and
FIGs. 16 to 18 are flowcharts to describe a noise eliminating method of an electronic device.

### BEST MODE

Reference will now be made in detail to the preferred embodiments of the present invention, examples of which are illustrated in the accompanying drawings. Wherever possible, the same reference numbers will be used throughout the drawings to refer to the same or like parts, and repeated description will be omitted for simplicity. The suffixes "module" and "unit" that are mentioned in the elements used to describe the present invention are merely used for the purpose of simplifying the description of the present invention. Therefore, the suffixes "module" and "unit" may also be alternately used for the reference of a specific element of the present invention. Each of the suffixes will not be signified or used to differentiate one from the other. Additionally, the accompanying drawings are merely provided to facilitate the understanding the embodiments disclosed in this specification. In addition, therefore, the technical scope disclosed in this specification will not be limited only to the accompanying drawings. Therefore, the accompanying drawings include all variations, equivalents and replacements that are included in the technical scope of the present invention.

Terms including ordinal numbers, such as "first", "second", and so on, may be used illustrating diverse elements. However, such elements will not be limited only to such terms. Herein, the corresponding terms will only be used to differentiate one element from another element.

When an element is said (or described) to be "connected to" or "in connection with" another element, the corresponding element may be directly connected to or may be in direct connection with the other element. However, it should be understood that yet another element may exist in-between. Conversely, when an element is said (or described) to be "connected to" or "in connection with" another element, although the corresponding element may be directly connected to or may be in direct connection with the other element, it should also be understood that no other element exists between the two elements.

Short expressions include multiple expressions unless they clearly mean something different in the context.

In this application, the terms "include(s)" or "have (or has)" are merely used to indicate the presence of a characteristic, number, step, operation, element, assembly part, or a combination of at least two or more of the above, which are mentioned in the description of the present invention. Therefore, the presence or possibility of additionally including one or more of other characteristics, numbers, steps, operations, elements, assembly parts, or combinations of the above will not be excluded in advance.

An electronic device disclosed in the present specification may include a terminal such as a mobile phone, a smartphone, a laptop computer, a digital broadcast terminal, a PDA (personal digital assistants), PMP (portable multimedia player), a navigation, a slate PC, a tablet PC, a ultrabook, a wearable device (e.g., a smartwatch, a smart glass, a head mounted display (HMD), etc.). An electronic device disclosed in the present specification may include a machine capable of autonomously processing or operating a prescribed job like a robot. The robot included in the electronic device described in the present specification may be a fixed type, a mount type, or a movable type. And, the movable-type robot may be configured to move autonomously.

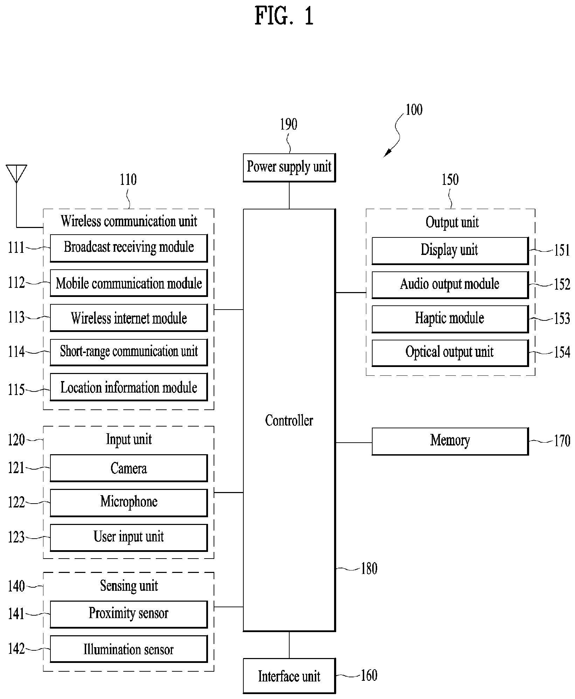

FIG. 1 illustrates a structural block view of an electronic device.

An electronic device 100 may include a wireless communication unit 110, an input unit 120, a sensing unit 140, an output unit 150, an interface unit 160, a memory 170, a controller 180, a power supply unit 190 and the like. As the components shown in FIG. 1 are not mandatory for implementation of the electronic device, the electronic device mentioned in the present specification may have components more or less than the above-listed components.

Particularly, the wireless communication unit 100 among the components may include at least one module capable of enabling a wireless communication between the electronic device 100 and a wireless communication system, between the electronic device 100 and another electronic device, or between the electronic device 100 and an external server. And, the wireless communication unit 110 may include at least one module configured to connect the electronic device 100 to at least one network.

The wireless communication unit 110 may include at least one of a broadcast receiving module 111, a mobile communication module 112, a wireless internet module 113, a short range communication module 114, a location information module 115 and the like.

The input unit 120 includes a camera 121 for obtaining images or video, a microphone 122, which is one type of audio input device for inputting an audio signal, and a user input unit 123 (e.g., a touch key, a push key, a mechanical key, a soft key, etc.) for allowing a user to input information. Audio or image data collected by the input unit 120 may be analyzed and processed into a user's control command.

The sensing unit 140 is typically implemented using one or more sensors configured to sense internal information of the electronic device, the surrounding environment information of the electronic device, and user information. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (e.g., see a camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The electronic device may be configured to utilize information obtained from one or more sensors of the sensing unit 140, and combinations thereof.

The output unit 150 is typically configured to output various types of information, such as audio, video, tactile output, and the like. The output unit 150 is shown having at least one of a display unit 151, an audio output module 152, a haptic module 153, and an optical output module 154. The display unit 151 may have an inter-layered structure or an integrated structure with a touch sensor in order to facilitate a touchscreen. The touchscreen may provide an output interface between the electronic device 100 and a user, as well as function as the user input unit 123 which provides an input interface between the electronic device 100 and the user.

The interface unit 160 serves as an interface with various types of external devices that can be coupled to the electronic device 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. The electronic device 100 may perform assorted control functions associated with a connected external device, in response to the external device being connected to the interface unit 160.

The memory 170 is typically implemented to store data to support various functions or features of the electronic device 100. The memory 170 may be configured to store application programs (or applications) executed in the electronic device 100, data or instructions for operations of the electronic device 100, and the like. Some of these application programs may be downloaded from an external server via wireless communication. Other application programs may be installed within the electronic device 100 at time of manufacturing or shipping, which is typically the case for basic functions of the electronic device 100 (e.g., receiving a call, placing a call, receiving a message, sending a message, etc.). It is common for application programs to be stored in the memory 170, installed on the electronic device 100, and executed by the controller 180 to perform an operation (or function) of the electronic device 100.

The controller 180 typically functions to control overall operation of the electronic device 100, in addition to the operations associated with the application programs. The controller 180 may provide or process information or functions appropriate for a user by processing signals, data, information and the like, which are input or output through the various components depicted above, or activating application programs stored in the memory 170.

And, the controller 180 may control some or all of the components illustrated in FIG. 1 to launch an application program stored in the memory 170. Moreover, the controller 180 may activate at least two of the components included in the electronic device to launch the application program.

The power supply unit 190 can be configured to receive external power or provide internal power in order to supply appropriate power required for operating elements and components included in the electronic device 100. The power supply unit 190 may include a battery, and the battery may be configured to be embedded in the terminal body, or configured to be detachable from the terminal body.

At least one portion of the above-mentioned components can cooperatively operate to implement operations, controls or controlling methods of the electronic device according to various embodiments mentioned in the following description. And, the operations, controls or controlling methods of the electronic device can be implemented on the mobile terminal by running at least one or more application programs saved in the memory 170.

In the following, prior to describe various embodiments implemented through the aforementioned electronic device 100, the above-listed components shall be described in detail with reference to FIG. 1.

First of all, regarding the wireless communication unit 110, the broadcast receiving module 111 of the wireless communication unit 110 is typically configured to receive a broadcast signal and/or broadcast associated information from an external broadcast managing entity via a broadcast channel. The broadcast channel may include a satellite channel, a terrestrial channel, or both. Two or more broadcast receiving modules 111 may be utilized to facilitate simultaneously receiving of two or more broadcast channels, or to support switching among broadcast channels.

The broadcast management server may mean a server which generates and transmits a broadcast signal and/or broadcast associated information, or a server which receives a pre-generated broadcast signal and/or broadcast associated information, and sends such items to a terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to at least one of technical standards (or broadcasting systems (e.g., ISO, IEC, DVB, ATSC, etc.) for transmission and reception of digital broadcast signals. The broadcast receiving module 111 can receive the digital broadcast signals using the system appropriate for the technical specifications according to the technical standards.

The broadcast associated information may include information associated with a broadcast channel, a broadcast program, a broadcast service provider, or the like. The broadcast associated information may also be provided via a mobile communication network, and in this case, received by the mobile communication module 112.

The broadcast associated information may be implemented in various formats such as Electronic Program Guide (EPG) of Digital Multimedia Broadcasting (DMB), Electronic Service Guide (ESG) of Digital Video Broadcast-Handheld (DVB-H), and the like. Broadcast signals and/or broadcast associated information received via the broadcast receiving module 111 may be stored in the memory 170.

The mobile communication module 112 can transmit/receive wireless signals to/from one or more network entities. Typical examples of a network entity include a base station, an external terminal, a server, and the like. Such network entities form part of a mobile communication network, which is constructed according to technical standards or communication methods for mobile communications (e.g., Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE) , LTE-A(Long Term Evolution-Advanced), and the like).

Examples of the wireless signals may include audio call signals, video call signals, or various formats of data according to communication of text and multimedia messages.

The wireless Internet module 113 is configured to facilitate wireless Internet access. This module may be internally or externally coupled to the electronic device 100. The wireless Internet module 113 may be configured to transmit and/or receive wireless signals via communication networks according to wireless Internet technologies.

Examples of such wireless Internet technologies include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies not listed above as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the wireless Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the electronic device 100 and a wireless communication system, communications between the electronic device 100 and another electronic device 100, or communications between the electronic device and a network where another electronic device 100 (or an external server) is located, via wireless area networks. One example of the wireless area networks is a wireless personal area networks.

In some embodiments, another electronic device 100 may include a wearable device, for example, a smart watch, a smart glass or a head mounted display (HMD), which is able to exchange data with the electronic device 100 (or otherwise cooperate with the electronic device 100). The short-range communication module 114 may sense (or recognize) the wearable device, and permit communication between the wearable device and the electronic device 100. In addition, when the sensed wearable device is a device which is authenticated to communicate with the electronic device 100, the controller 180, for example, may cause transmission of data processed in the electronic device 100 to the wearable device via the short-range communication module 114. Hence, a user of the wearable device may use the data processed in the electronic device 100 on the wearable device. For example, when a call is received in the electronic device 100, the user may answer the call using the wearable device. Also, when a message is received in the electronic device 100, the user can check the received message using the wearable device.

The location information module 115 is generally configured to obtain a position (or a current position) of the electronic device. As an example, the location information module 115 includes a Global Position System (GPS) module, a Wireless Fidelity (Wi-Fi) module, or both. As one example, when the electronic device uses a GPS module, a position of the electronic device may be obtained using a signal sent from a GPS satellite. As another example, when the electronic device uses the Wi-Fi module, a position of the electronic device can be obtained based on information related to a wireless access point (AP) which transmits or receives a wireless signal to or from the Wi-Fi module. If necessary, the location information module 115 may perform a prescribed function of one of other modules of the wireless communication unit to obtain data of a position of the electronic device substitutingly or additionally. The location information module 115 is a module used to obtain a position (or a current position) of the electronic device and is non-limited to a mobile configured to directly calculate or obtain a position of the electronic device.

Next, the input unit 120 may be configured to permit various types of inputs such as image information (or signal), audio information (or signal), data, and information inputted from a user. For the input of the image information, the electronic device 100 may include one or more cameras 121. Such cameras 121 may process image frames of still pictures or video obtained by image sensors in a video call mode or a shot mode. The processed image frames can be displayed on the display unit 151 or stored in memory 170. In some cases, a plurality of the cameras 121 provided to the electronic device 100 may be disposed in a matrix configuration to permit a plurality of image informations having various angles or focal points to be inputted to the electronic device 100. As another example, a plurality of the cameras 121 may be located in a stereoscopic arrangement to obtain right and left images for implementing a stereoscopic image.

The microphone 122 processes an external sound signal into electric audio data. The processed audio data can be utilized in various manners according to the function currently performed (or the application program currently executed) in the electronic device 100. The microphone 122 includes assorted noise removing algorithms to remove unwanted noise generated in the course of receiving the external audio signal. Moreover, the microphone 122 includes a plurality of microphones.

Besides, the microphone 122 may process an external sound signal attributed to a proximity or contact touch into electric audio data.

The user input unit 123 is configured to receive an input of information from a user. If information is inputted through the user input unit 123, the controller 180 can control an operation of the electronic device 100 to correspond to the inputted information. The user input unit 123 may include one or more of a mechanical input means (or a mechanical key (e.g., a button located on a front and/or rear surface or a side surface of the electronic device 100, a dome switch, a jog wheel, a jog switch, etc.)) and a touch-sensitive input means. As one example, the touch-sensitive input means may include a virtual key, a soft key or a visual key, which is displayed on a touchscreen through software processing, or a touch key disposed on the electronic device except the touchscreen. Meanwhile, the virtual or visual key can be displayed on the touchscreen in various forms, for example, graphic, text, icon, video, or a combination thereof.

The sensing unit 140 is generally configured to sense one or more of internal information of the electronic device, surrounding environment information of the electronic device, and user information and generate a corresponding sensing signal. Based on the sensing signal, the controller 180 may control the activation or operation of the electronic device 100 or perform data processing, function or operation in association with an application program installed on the electronic device 100. The sensing unit 140 may be implemented using any of a variety of sensors, some of which will now be described in more detail as follows.

First of all, the proximity sensor 141 may include a sensor to sense presence or absence of an object approaching a surface, or an object located near a surface, by using an electromagnetic field, infrared rays, or the like without a mechanical contact. The proximity sensor 141 may be disposed in an inner region of the electronic device enclosed by the touchscreen, or near the touchscreen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touchscreen is implemented as a capacitance type, the proximity sensor 141 can be configured to sense proximity of a pointer relative to the touchscreen by changes of an electromagnetic field, which is responsive to an approach of an object with conductivity. In this case, the touchscreen (or touch sensor) may also be categorized as a proximity sensor.

For clarity of description, the term "proximity touch" will often be referred to herein to denote the scenario in which a pointer is positioned to be proximate to the touchscreen without contacting the touchscreen. The term "contact touch" will often be referred to herein to denote the scenario in which a pointer makes physical contact with the touchscreen. For the position corresponding to the proximity touch of the pointer relative to the touchscreen, such position will correspond to a position where the pointer is perpendicular to the touchscreen. The proximity sensor 141 may sense proximity touch, and proximity touch patterns (e.g., proximity touch distance, proximity touch direction, proximity touch speed, proximity touch time, proximity touch position, proximity touch moving status, etc.). In some implementations, as described above, the controller 180 may process data (or information) corresponding to proximity touches and proximity touch patterns sensed by the proximity sensor 141, and output visual information corresponding to the processed data to the touchscreen. In addition, the controller 180 can control the electronic device 100 to execute different operations or process different data according to whether a touch to a same point on the touchscreen is a proximity touch or a contact touch.

A touch sensor can sense a touch (or a touch input) applied to the touchscreen (or the display unit 151) using any of a variety of touch types. Examples of such touch types include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

Thus, when a touch input is sensed by a touch sensor, a corresponding signal(s) may be sent to a touch controller. The touch controller may process the received signal(s), and then transmit corresponding data to the controller 180. Accordingly, the controller 180 may sense which region of the display unit 151 has been touched, etc. Here, the touch controller may include a component separate from the controller 180 or the controller 180 itself.

In some embodiments, the controller 180 may execute the same or different controls according to a type of touch object that touches the touchscreen (or a touch key provided to a location other than the touchscreen). Whether to execute the same or different control according to the object which provides a touch input may be determined based on a current operating state of the electronic device 100 or a currently executed application program, for example.

The aforementioned touch sensor and the aforementioned proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

An ultrasonic sensor may be implemented to recognize position information relating to a touch object using ultrasonic waves. The controller 180 may calculate a position of a wave generation source based on information sensed by an optical sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. In detail, the position of the wave generation source may be calculated using the time difference from the time that the ultrasonic wave reaches the sensor based on the light as a reference signal.

Meanwhile, the camera 121 described as a component of the input unit 120 may include at least one of a camera sensor (e.g., CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touchscreen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the electronic device 100. For example, the display unit 151 may display a running screen information of an application program run in the electronic device 100 or User Interface (UI) and Graphic User Interface (GUI) information according to the running screen information.

In some embodiments, the display unit 151 may be implemented as a stereoscopic display unit for displaying stereoscopic images.

A typical stereoscopic display unit may employ a 3D display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data received from the wireless communication unit 110 or audio data stored in the memory 170 in call signal reception mode, call mode, record mode, voice recognition mode, broadcast reception mode, or the like. The audio output module 152 may output sound signals related to a function (e.g., a call signal reception sound, a message reception sound, etc.) performed by the electronic device 100. The audio output module 152 may include a receiver, a speaker, a buzzer, and the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the electronic device 100.

An optical output module 154 can output a signal for indicating an event generation using light of a light source. Examples of events generated in the electronic device 100 may include message reception, call signal reception, a missed call, an alarm, a schedule notice, an email reception, information reception through an application, and the like.

A signal output by the optical output module 154 may be implemented in such a manner that the electronic device emits monochromatic light or light with a plurality of colors. The signal output may be terminated as the electronic device senses that a user has checked the generated event, for example.

The interface unit 160 serves as a passage to all external devices connected to the electronic device 100. The interface unit 160 may receive data transmitted from an external device, receive power to transfer to elements and components within the electronic device 100, or transmit internal data of the electronic device 100 to such an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, and the like.

The identification module is a chip that stores various informations for authenticating authority of using the electronic device 100, and may include User Identity Module (UIM), Subscriber Identity Module (SIM), Universal Subscriber Identity Module (USIM), and the like. In addition, a device having the identification module (also referred to hereinafter as an "identifying device") may be manufactured as a smart card. Accordingly, the identifying device can be connected with the terminal 100 via the interface unit 160.

When the electronic device 100 is connected with an external cradle, the interface unit 160 can serve as a passage to allow power from the cradle to be supplied to the electronic device 100 or may serve as a passage to allow various command signals input by the user from the cradle to be transferred to the electronic device there through. Various command signals or power input from the cradle may operate as signals for recognizing that the electronic device is properly mounted on the cradle.

The memory 170 can store programs to support operations of the controller 180 and store input/output data (e.g., phonebook, messages, still images, videos, etc.). The memory 170 may store data related to various patterns of vibrations and audio which are output in response to touch inputs on the touchscreen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The electronic device 100 may also be operated in relation to a network storage device that performs the storage function of the memory 170 over a network, such as the Internet.

As describe above, the controller 180 controls operations related to application programs and typically controls overall operations of the electronic device 100. For example, the controller 180 may execute or release a lock state of restricting an input of a user's control command for applications if a status of the electronic device meets a preset condition.

Moreover, the controller 180 can perform the control and processing associated with voice calls, data communications, video calls, and the like, or perform pattern recognition processing to recognize a handwriting input and a picture drawing input performed on the touchscreen as a text and an image, respectively. Furthermore, the controller 180 can control one or a combination of the above-described components in order to implement various embodiments described in the following on the electronic device 100 according to the present invention.

Moreover, the controller 180 can determine an external sound signal according to a proximity or contact touch based on a sound or audio signal obtained through the microphone 122. The controller 180 may determine a function corresponding to an audio signal pattern according to the obtained audio signal and then control the electronic device 100 to perform the determined function.

The controller 180 can obtain a voice command through the voice microphone 122 and recognize the voice according to the obtained voice command. And, the controller 180 can perform a function according to the recognized voice command.

The power supply unit 190 may receive external power or internal power and supply the appropriate power required for operating respective elements and components included in the electronic device 100 under the control of the controller 180. The power supply unit 190 may include a battery, which is typically rechargeable, or be detachably attached to the terminal body for charging, etc.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described in the following may be implemented in a computer-readable recording medium or a similar recording medium using software, hardware, or any combination thereof for example.

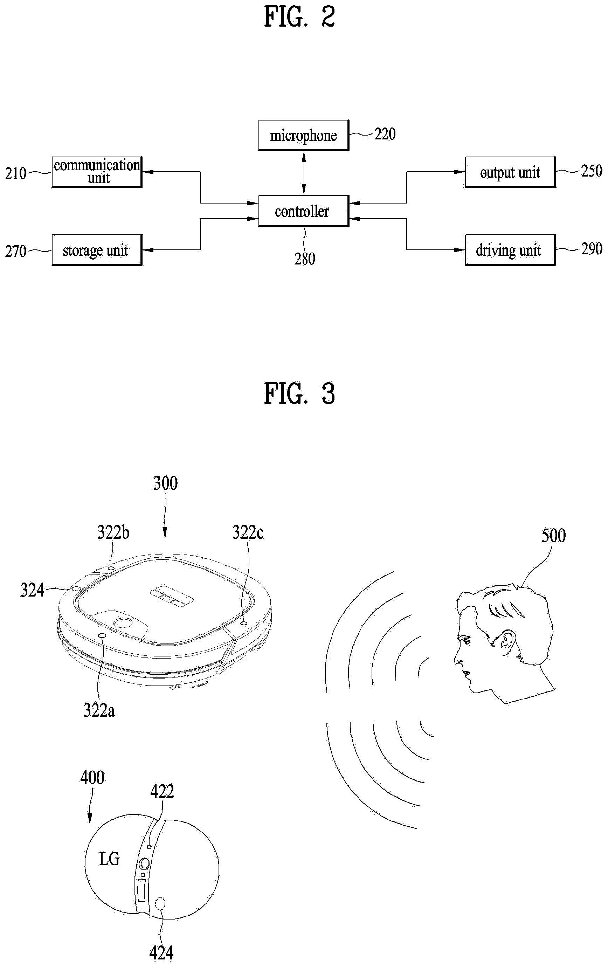

FIG. 2 is a block diagram for the configuration of an electronic device according to one embodiment of the present invention.

Referring to FIG. 2, an electronic device 200 may include a communication unit 210, a microphone 220, an output unit 250, a storage unit 270, a controller 280 and a driving unit 290. Some of the components included in the electronic device 200 may be removed or other components may be further included therein. The electronic device 200 may include the former electronic device 100, whereby some of the components of the former electronic device 100 may be included in the latter electronic device 200.

The communication unit 210 may include at least one module capable of enabling a wireless communication between the electronic device 200 and a wireless or wired communication system, between the electronic device 100 and another electronic device 100/200, or between the electronic device 200 and an external server. And, the communication unit 210 may correspond to the former wireless communication unit 110.

The microphone 220 processes a voice signal into electrical data. For instance, the microphone 220 can include a voice obtaining microphone configured to receive a voice signal including a noise at a first level and a noise obtaining microphone configured to receive a voice signal including a noise at a second level higher than the first level. Moreover, the microphone 220 may include a plurality of voice obtaining microphones and a plurality of noise obtaining microphones. The microphone 220 may correspond to the former microphone 122.

The output unit 250 may include a display unit 251 configured to output an image or video and an audio output unit 252 configured to output an audio or sound.

The display unit 251 may display (or output) information processed by the electronic device 200. For example, the display unit 251 may display a running screen information of an application program currently run in the electronic device 200 or UI/GUI (user interface/graphic user interface) information according to the running screen information. And, the display unit 251 may correspond to the former display unit 151.

The audio output unit 252 may output various audio data. For instance, the audio output unit 252 may output an audio signal related to a function performed in the electronic device 200. And, the audio output unit 252 may correspond to the former audio output module 152.

The storage unit 270 can store data for supporting various functions of the electronic device 200. For instance, the storage unit 270 can store data for a function corresponding to a recognized voice. The storage unit 270 may correspond to the former memory 170.

The controller 280 may control an operation related to an application program and overall operations of the electronic device 200. The controller 280 can estimate a noise at a second level from a voice signal received by the noise obtaining microphone, eliminate a nose at a first level from the voice signal received by the voice obtaining microphone, and perform an operation corresponding to the voice signal from which the noise at the first level has been eliminated. The controller 280 may include at least one processor and correspond to the former controller 180.

The driving unit 290 may drive the electronic device 200 to move. Hence, the electronic device 200 can move in response to the drive of the driving unit 290. For instance, the driving unit 290 may include at least one motor and drive the electronic device 200 to move by operating the included motor.

FIG. 3 is a perspective diagram of an electronic device.

Referring to FIG. 3, an electronic device 300/400 may have a body of a curved cylindrical shape, by which the present invention may be non-limited. For example, the body may have a bar shape, an oval shape, a ball shape, an animal shape, a humanoid shape similar to a human shape, or the like.

The electronic device 300/400 may include at least one case (e.g., frame, housing, cover, etc.) configuring an exterior of the electronic device 300/400. For instance, the electronic device 300/400 may include a first case of a top side and a second case of a bottom side. Various electronic parts may be disposed in an inner space formed by coupling the first and second cases together. The disposed electronic parts may include at least one of the aforementioned components.

A display unit is disposed on a front side of the electronic device 300/400 to output information. For instance, a window of the display unit is installed in the first case to configure a portion of a front side of the electronic device body together with the first case.

A camera and a microphone may be disposed on the front side of the electronic device 300/400. The microphone includes a plurality of microphones. For instance, a voice obtaining microphone 322/422 and a noise obtaining microphone 324/424 are disposed within the electronic device 300/400. In a first case region having the voice obtaining microphone 322/422 disposed therein, a via hole for receiving an external voice signal may be formed. Yet, in the first case region having the noise obtaining microphone 324/424 disposed therein, a via bole may not be formed. The reason for this is to raise a reception rate of a voice signal externally received by the voice obtaining microphone 322/422 and a reception rate of a noise signal internally received by the noise obtaining microphone 324/424.

The electronic device 300 includes a multitude of voice obtaining microphones 322 such as first to third voice obtaining microphones 322a, 322b and 322c and the like and a single noise obtaining microphone 324. In some cases not forming part of the invention, the electronic device 300 may include a multitude of voice obtaining microphones 322 and a multitude of noise obtaining microphones 324. On the other hand, the electronic device 400 may include a single voice obtaining microphone 422 and a single noise obtaining microphone 424.

Thus, if the electronic device 300/400 receives a voice command of a user 500, it is able to perform an operation according to the voice command recognized by eliminating noise included in the received voice signal. Hence, the electronic device 300/400 disposes the voice obtaining microphone 322/422 to receive a voice signal at a low noise level and also disposes the noise obtaining microphone 324/424 to receive a voice signal at a high noise level, thereby easily eliminating the noise from the voice signal by raising a signal-to-noise ratio (SNR). For instance, the voice obtaining microphone 322/422 can be disposed far away from the noise source that generates noise. And, the noise obtaining microphone 324/424 can be disposed adjacent to the noise source. Moreover, in order not to receive the noise from the noise source, the voice obtaining microphone 322/422 is covered with a cover containing a sound absorbing material to cut off noise. In order to receive the noise of the noise source well, the noise obtaining microphone 324/424 can be disposed open.

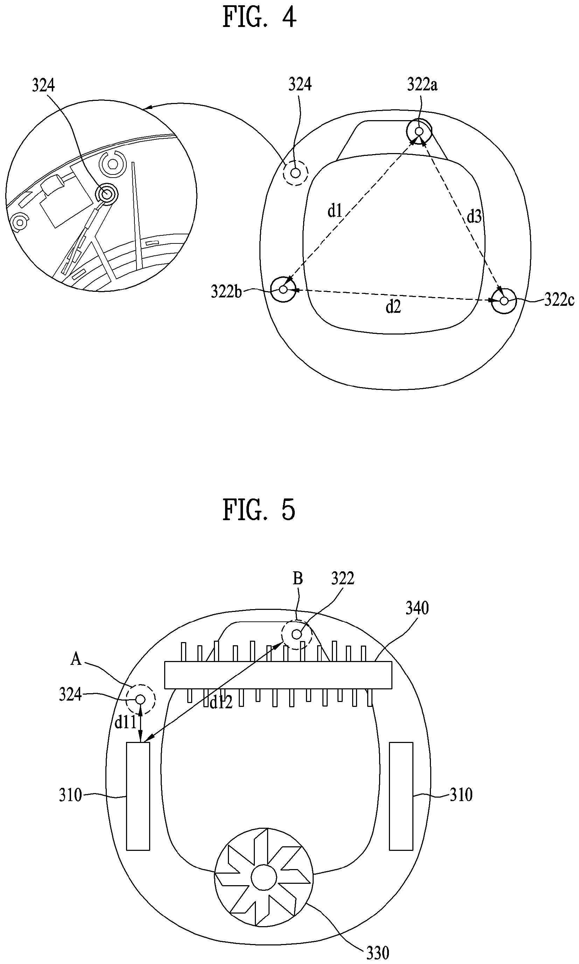

FIG. 4 is a diagram to illustrate a location of a microphone in an electronic device.

Referring to FIG. 4, an electronic device according to the present invention includes at least one voice obtaining microphone 322 and at least one noise obtaining microphone 324. The voice obtaining microphone 322 can receive a voice signal containing a noise at a first level. And, the noise obtaining microphone 324 can receive a voice signal containing a noise at a second level higher than the first level.

For instance, if a single voice obtaining microphone 322 and a single noise obtaining microphone 324 are disposed, the voice obtaining microphone 322 is disposed closest to a noise source for generating noise and the noise obtaining microphone 324 can be disposed farthest away from the noise source for generating noise. The reason for this is to easily eliminate a noise from a voice signal by raising a signal-to-noise ratio (SNR) of a signal received from the noise obtaining microphone 324.

Hence, a controller estimates the noise at the second level from the voice signal received by the noise obtaining microphone 324, and is able to eliminate the noise at the first level from the voice signal received by the voice obtaining microphone 322 based on the estimated noise. In doing so, since the voice signal received by the noise obtaining microphone 324 has the highest noise level, it is advantageous for the noise estimation. Since the voice signal received by the voice obtaining microphone 322 has the lowest noise level, it is advantageous for the noise elimination on the basis of the estimated noise. In particular, the controller estimates the noise from the voice signal received by the noise obtaining microphone 324 and eliminates the noise from the voice signal received by the voice obtaining microphone 322. Hence, as a voice recognition rate is improved, the controller can accurately perform an operation corresponding to a voice command.

The multitude of voice obtaining microphones 322 are provided, they may be spaced apart from each other in equal distances. In some cases, the voice obtaining microphones 322 may be spaced apart from each other in different distances.

The voice obtaining microphone 322, as shown in FIG. 4, may include first to third voice obtaining microphones 322a, 322b and 322c and can be disposed on an inner edge of a top plate of the electronic device in a manner of being spaced apart from each other in predetermined distances. In particular, if the first and second voice obtaining microphones 322a and 322b are disposed in a first distance d1 and the second and third voice obtaining microphones 322b and 322c are disposed in a second distance d2, the first and third voice obtaining microphones 322a and 322c can be disposed in a third distance d3. Hence, the first to third distances may be equal to or different from one another. For instance, the first to third voice obtaining microphones 322a, 322b and 322c may be disposed in a triangular configuration to enable a sound source direction search, by which the present invention is non-limited.

A prescribed one of the first to third voice obtaining microphones 322a, 322b and 322c is sealed with a cover containing a sound absorbing material, thereby cutting off the reception of noise to the maximum. In this case, if the voice obtaining microphone sealed with the sound absorbing material contained cover is the first voice obtaining microphone 322a, while the electronic device is operating, the controller can recognize a voice command by eliminating a noise of a voice signal received from the first voice obtaining microphone 322a. While the electronic device stops, the controller can recognize a voice command through voice signals received from the second and third voice obtaining microphones 322b and 322c. In particular, while the electronic device is operating, the first voice obtaining microphone 322a is used for the voice recognition. While the electronic device stops, the second and third voice obtaining microphones 322b and 322c can be used for the voice recognition. The reason for this is described as follows. First of all, while the electronic device is operating, since it is an environment at a high noise level, a noise level of a voice signal received from the first voice obtaining microphone 322a is lower than that of a voice signal received from each of the second and third voice obtaining microphones 322b and 322c. While the electronic device stops, since it is an environment having a low noise level, a level of a voice signal received from each of the second and third voice obtaining microphones 322b and 322c is higher than that of a voice signal received from the first voice obtaining microphone 322a.

In some cases, since each of the first to third voice obtaining microphones 322a, 322b and 322c is sealed with a cover containing a sound absorbing material, noise reception may be cut off to the maximum. In doing so, irrespective of an operation or stop of the electronic device, among the voice signals received from the first to third voice obtaining microphones 322a, 322b and 322c, the voice signal having the lowest noise level can be used for the voice recognition.

The noise obtaining microphone 324 may be disposed on an inner edge of the top plate of the electronic device. And, the noise obtaining microphone 324 may be disposed near the noise source. The noise obtaining microphone 324, as shown in FIG. 4, may be disposed in a seat recess formed in an inner side of the top plate. Since one side of the seat recess is open in a noise source direction, the noise obtaining microphone 324 can receive a voice signal including a high-level noise. In this case, when the electronic device is operating, the controller estimates a noise of a voice signal received from the noise obtaining microphone 324. While the electronic device stops, the controller may not estimate the noise of the voice signal received from the noise obtaining microphone 324. In particular, while the electronic device is operating, the noise obtaining microphone 324 may be used for the noise estimation. While the electronic device stops, the noise obtaining microphone 324 may not be used for the noise estimation. The reason for this is described as follows. First of all, while the electronic device is operating, since it is an environment on a high noise level, the noise of the voice signal received from the voice obtaining microphone 322 is eliminated by estimating the noise of the voice signal received from the noise obtaining microphone 324. Yet, while the electronic device stops, since it is an environment on a low noise level, it is not necessary to eliminate the noise of the voice signal received from the voice obtaining microphone 322.

In some cases not forming part of the invention, if a multitude of the noise obtaining microphones 324 are provided, the controller can use a voice signal at a highest noise level among voice signals received from a multitude of the noise obtaining microphones 324 for the noise estimation.

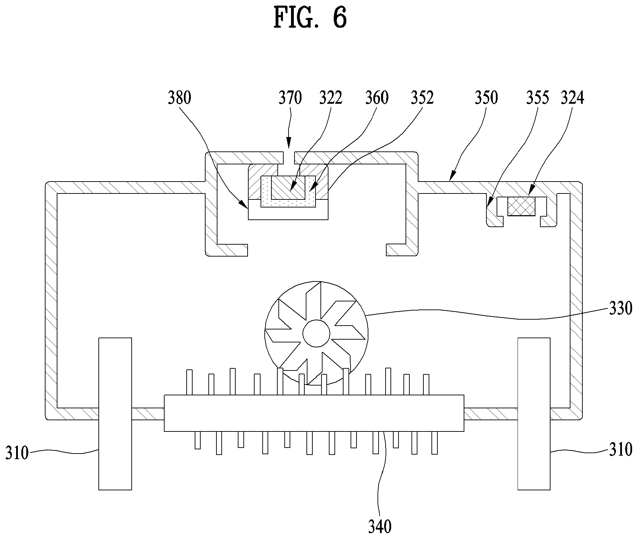

FIG. 5 and FIG. 6 are diagrams of a noise obtaining microphone and a voice obtaining microphone of an electronic device. FIG. 5 is a diagram of a top view to illustrate an inside of a robot cleaner, while FIG. 6 is a diagram of a lateral view of the inside of the robot cleaner.

Referring to FIG. 5 and FIG. 6, a robot cleaner may include a body unit 350 configuring an exterior, a roller 310 configured to move the robot cleaner, a cleaning brush 340 configured to collect dust, a suction 330 configured to suck dust, a voice obtaining microphone 322 configured to receive a voice signal including a noise at a first level, a noise obtaining microphone 324 configured to receive a voice signal including a noise at a second level higher than the first level, and a controller configured to control these components. In this case, the controller estimates the noise at the second level from the voice signal received by the noise obtaining microphone 324, eliminates the noise at the first level from the voice signal received by the voice obtaining microphone 322 based on the estimated noise, and is able to perform an operation corresponding to the voice signal from which the noise at the first level has been eliminated.

The voice obtaining microphone 322 is disposed in a first distance from a noise source from which noise is generated, and the noise obtaining microphone 324 is disposed in a second distance from the noise source generating the noise. In this case, the first distance may be longer than the second distance. For instance, if the roller 310 is the noise source, the noise obtaining microphone 324 is disposed on a region A adjacent to the roller 310 in a distance d11 from the roller 310 generating the noise, while the voice obtaining microphone 322 is disposed on a region B distant from the roller 310 in a distance d12 from the roller generating the noise. In this case, the distance d12 is longer than the distance d11.

On an inner side of the body unit 350 of the robot cleaner, a first seat recess 352 having the voice obtaining microphone 322 seated thereon and a second seat recess 355 having the noise obtaining microphone 324 seated thereon can be disposed. In this case, regarding the first seat recess 352, one side toward an inner direction of the body unit 350 is sealed with a cover 380 and a via hole 370 opening into an external environment can be formed in the other side toward an outer direction of the body unit 350. And, the first seat recess 352 having the voice obtaining microphone 322 seated thereon can be filled up with a sound absorbing material 360. Moreover, regarding the second seat recess 355 having the noise obtaining microphone 324 seated thereon, one side toward an inner direction of the body unit 350 is open but the other side toward an outer direction of the body unit 350 may be closed. In this case, the open direction of one side of the second seat recess 355 may face the noise source from which noise is generated. For instance, if the noise source is the roller 310, the open direction of one side of the second seat recess 355 may face the roller 310 from which the noise is generated.

Therefore, the voice obtaining microphone 322 can minimize the reception of noises (e.g., cleaning noise, vibration noise, etc.) generated internally. And, the noise obtaining microphone 324 can maximize the reception of noises (e.g., cleaning noise, vibration noise, etc.) generated internally.

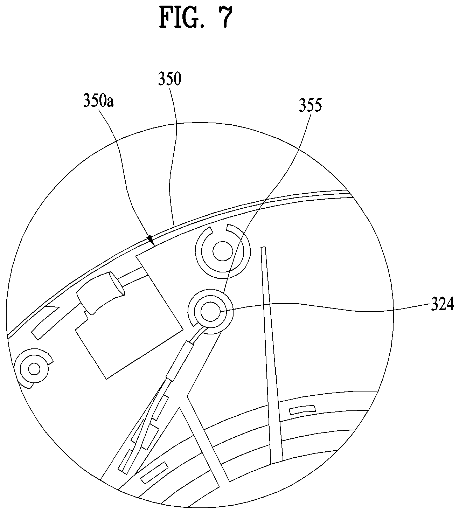

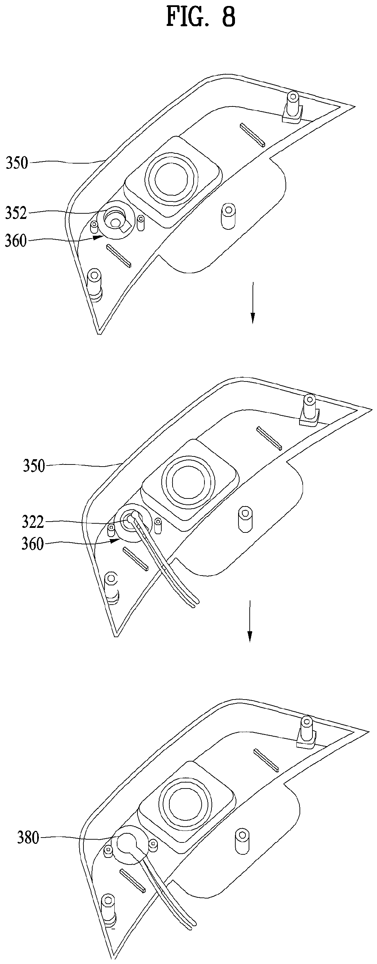

FIG. 7 and FIG. 8 are diagrams to illustrate a shielding process of a voice obtaining microphone.

Referring to FIG. 7 and FIG. 8, a first seat recess 352 can be formed on an inner lateral side 350a of a body unit 350 of an electronic device. In this case, one side of the first seat recess 352 toward an inner direction of the body unit 350 is open and a via hole opening into an external environment can be formed in the other side of the first seat recess 352 toward an outer direction of the body unit 350. And, a periphery of the first seat recess 352 can be filled up with a sound absorbing material 360 such as a sponge or the like. After a voice obtaining microphone 322 has been seated on the first seat recess 352, the first seat recess 352 having the voice obtaining microphone 322 seated thereon is covered with a sound absorbing cover 380. And, the sound absorbing cover 380 can be fixed to an inner side 350a of the body unit 350. Hence, the voice obtaining microphone 322 can minimize the reception of noises (e.g., cleaning noise, vibration noise, etc.) generated internally.

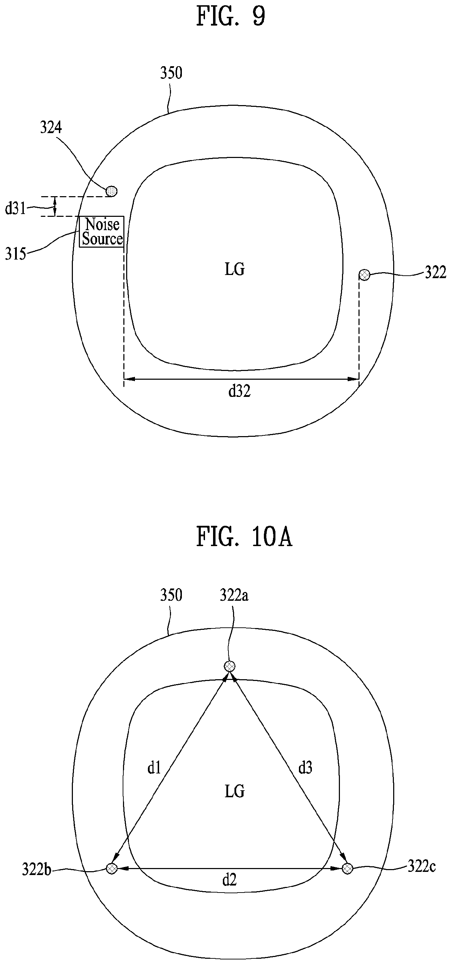

FIG. 9 is a diagram to describe a distance relation between a noise source and a microphone.

Referring to FIG. 9, a voice obtaining microphone 322 is disposed in a distance d32 from a noise source 315 generating noise and a noise obtaining microphone 324 is disposed in a distance d31 from the noise source 315 generating the noise. In this case, the distance d32 may be longer than the distance 31. In particular, the noise obtaining microphone 324 is preferably disposed closest to the noise source 315 generating the noise, and the voice obtaining microphone 322 is preferably disposed farthest from the noise source 315 generating the noise. If a multitude of the noise sources 315 are provided, the noise obtaining microphone 324 may be preferably disposed closest to the noise source 315 having a highest noise level, and the voice obtaining microphone 322 may be preferably disposed farthest from the noise source 315 having the highest noise level.

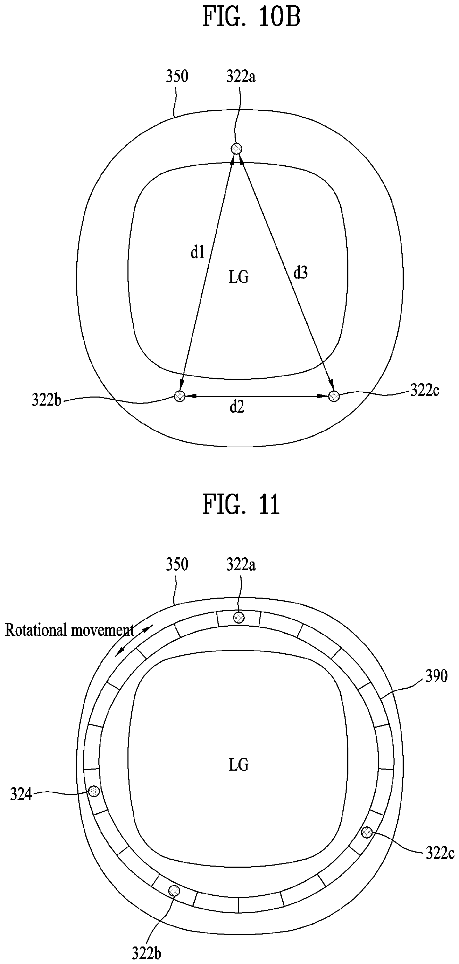

FIG. 10A and FIG. 10B are diagrams to describe a distance relation between microphones.

Referring to FIG. 10A and FIG. 10B, a multitude of voice obtaining microphones 322 can be disposed in a manner of being spaced apart from each other in prescribed distances. In this case, when a multitude of the voice obtaining microphones 322 are provided, as shown in FIG. 10A, they may be spaced apart from each other in equal distances. Alternatively, the voice obtaining microphones 322, as shown in FIG. 10B, may be spaced apart from each other in different distances.

For instance, if the first and second voice obtaining microphones 322a and 322b are disposed in a first distance d1 and the second and third voice obtaining microphones 322b and 322c are disposed in a second distance d2, the first and third voice obtaining microphones 322a and 322c can be disposed in a third distance d3. In this case, the first to third distances can be equal to or different from one another FIG. 10A, FIG. 10B]. Moreover, the first to third voice obtaining microphones 322a, 322b and 322c may be disposed in a triangular configuration to enable a sound source direction search, by which the present invention is non-limited.

Thus, if the electronic device moves, the controller eliminates a noise at a first level from a voice signal received by a preset specific one of a multitude of the voice obtaining microphones and is able to perform an operation corresponding to the voice signal from which the noise at the first level is eliminated. If the electronic device stops, the controller can perform an operation corresponding to a voice signal received from one of a multitude of the voice obtaining microphones except the specific voice obtaining microphone.

Besides, in a case not forming part of the invention, a multitude of noise obtaining microphones can be disposed in prescribed distances [not shown in the drawing]. When a multitude of the noise obtaining microphones are provided, they may be spaced apart from each other in equal distances. In some cases, the noise obtaining microphones may be spaced apart from each other in different distances. This can be designed variously according to locations of a noise source.

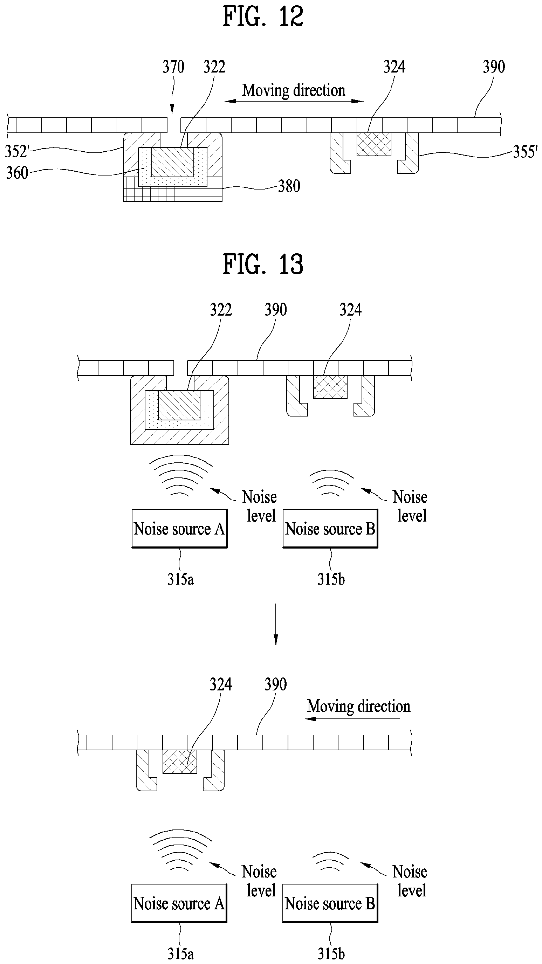

FIG. 11 and FIG. 12 are diagrams to describe an electronic device having a movable microphone.

An electronic device according to the present invention uses a movable microphone shown in FIG. 11 and FIG. 12. The electronic device including the movable microphone includes a body unit 350 configuring an exterior of the electronic device and a rotational frame 390 configured to rate along a circumference of the body unit 350 by being coupled with the body unit 350. In the rotation frame 390, a third seat recess 352 having a voice obtaining microphone 322 seated thereon and a fourth seat recess 355 having a noise obtaining microphone 324 seated thereon can be disposed. In this case, one side of the third seat recess 352 toward an inner direction of the body unit 350 is sealed with a cover 380 and a via hole opening into an external environment can be formed in the other side of the third seat recess 352 toward an outer direction of the body unit 350. And, the third seat recess 352 having the voice obtaining microphone 322 seated thereon can be filled up with a sound absorbing material 360. Moreover, regarding the fourth seat recess 355 having the noise obtaining microphone 324 seated thereon, one side of the fourth seat recess 355 toward an inner direction of the body unit 350 may be open and the other side of the fourth seat recess 355 toward an outer direction of the body unit 350 may be closed. In this case, the open direction of one side of the fourth seat recess 355 may face a noise source from which noise is generated.

Meanwhile, based on a noise level of a voice signal received from the noise obtaining microphone 324, the controller can move the noise obtaining microphone 324 in a direction on a highest noise level by rotating the rotational frame 390.

FIG. 13 is a diagram to illustrate a rotational movement of a microphone according to a noise level.

Referring to FIG. 13, a controller of an electronic device rotates a rotational frame 390 having a noise obtaining microphone 324 disposed therein. Each time the noise obtaining microphone 324 is rotationally moved by a prescribed distance, the controller measures a noise level from a voice signal received by the noise obtaining microphone 324. If 1 rotational operation of the rotational frame 390 is completed, the controller can rotationally move the noise obtaining microphone 324 in a direction on a highest noise level based on the measured noise level. The reason for moving the noise obtaining microphone 324 near the noise source on the highest noise level is to facilitate a noise measurement by raising a signal-to-noise ratio (SNR). In particular, the electronic device according to the present invention estimates a noise by raising an SNR of a signal received from the noise obtaining microphone 324, thereby easily eliminating a noise of a voice signal received from the voice obtaining microphone 322.

The controller, as shown in FIG. 13, measures a noise level from a voice signal received by the noise obtaining microphone 324 by rotating the rotational frame 390. If a noise level of a noise source A 315a is higher than that of a noise source B 315b, the controller can move the noise obtaining microphone 324 to a location near the noise source B 315b by rotating the rotational frame 390.

Moreover, although the electronic device according to the present invention may rotationally move the noise obtaining microphone 324 to correspond to an internal noise source, it is able to rotationally move the noise obtaining microphone 324 to correspond to an external noise source by disposing a noise obtaining microphone outside the body unit 350.

Therefore, although various noises are generated from multiple noise sources, the electronic device according to the present invention can easily eliminate a noise of a voice signal, thereby raising a voice recognition rate.

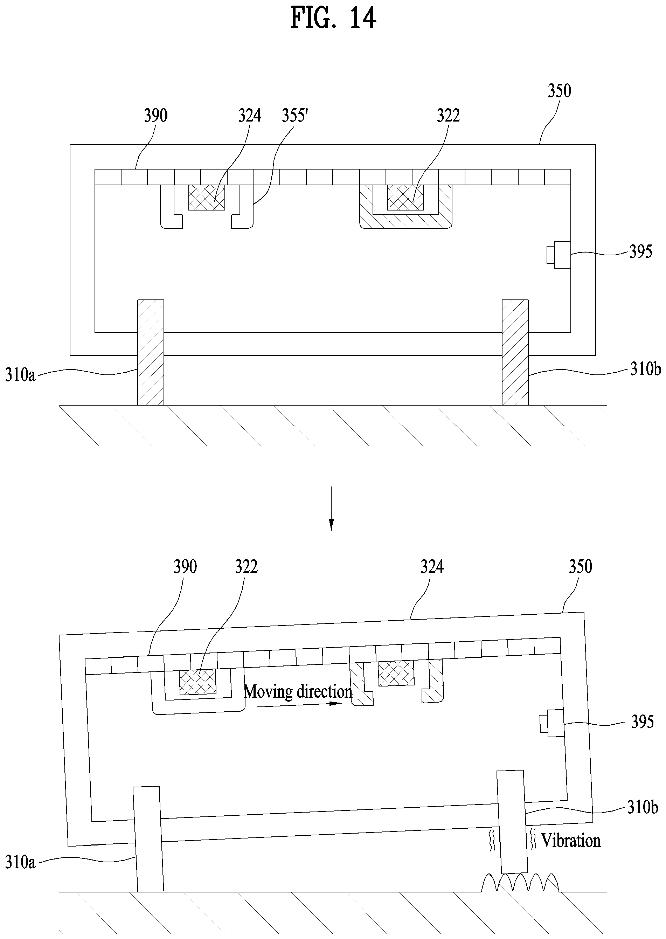

FIG. 14 is a diagram to illustrate a movement of a noise obtaining microphone according to vibration.

Referring to FIG. 14, an electronic device including a movable microphone includes a body unit 350 configuring an exterior of the electronic device and a rotational frame 390 configured to rate along a circumference of the body unit 350 by being coupled with the body unit 350. In the rotation frame 390, a third seat recess 352 having a voice obtaining microphone 322 seated thereon and a fourth seat recess 355 having a noise obtaining microphone 324 seated thereon can be disposed. And, the electronic device may include a vibration sensor 395 configured to sense vibration of the body unit 350 by being disposed in the body unit 350.

Meanwhile, based on the vibration strength sensed by the vibration sensor 395, the controller rotates the rotational frame 390 so as to move the noise obtaining microphone 324 close to a moving unit configured to the electronic device as close as possible. In this case, if the vibration strength is equal to or greater than a preset reference, the controller rotates the rotational frame 390 so as to move the noise obtaining microphone 324 to the moving unit for moving the electronic device as close as possible. If the vibration strength is smaller than the preset reference, the controller can ignore the sensed vibration strength. For instance, the moving unit for moving the electronic device may include at least one roller 310.

If a ground is flat, as shown in FIG. 14, the electronic device moved by the roller 310 barely has vibration. If the ground is uneven, the electronic device may generate a vibration noise due to the vibration of the roller 310. In doing so, the controller measures a vibration strength from the vibration sensor 395. If determining that a vibration noise is generated from the roller 310b, the controller can move the noise obtaining microphone 324 to the roller 310b as close as possible by rotating the rotational frame 390.

Therefore, although a vibration noise is generated in the course of moving the electronic device, the electronic device according to the present invention can easily eliminate a noise of a voice signal, thereby raising a voice recognition rate.

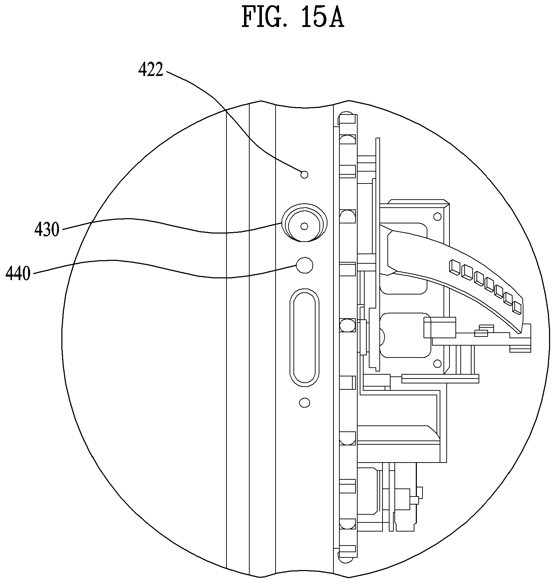

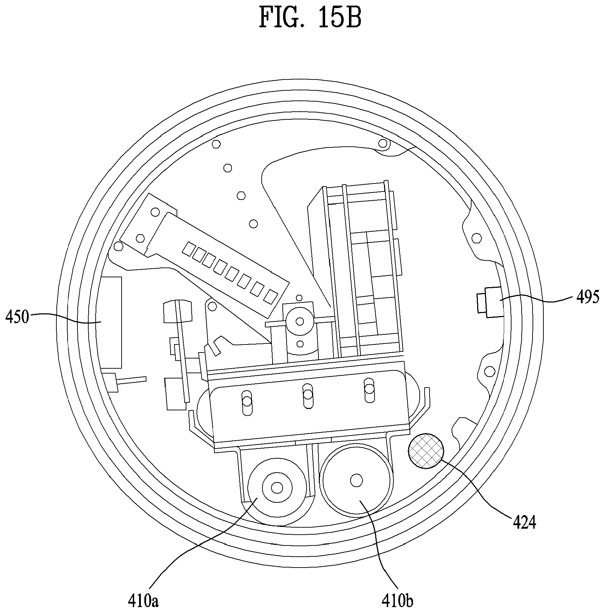

FIG. 15A and FIG. 15B are diagrams to show a disposition of a microphone applicable to a movable home robot. FIG. 15A is a front diagram and FIG. 15B is a lateral inside diagram.

Referring to FIG. 15A and FIG. 15B, a movable home robot may include a body unit configuring an exterior, a roller 410 moving a robot cleaner, a camera 430, an IR (infrared) sensor 440, a distance sensor 450, a vibration sensor 495, a voice obtaining microphone 422 for obtaining a voice signal including a noise at a first level, a noise obtaining microphone 424 for receiving a voice signal including a noise at a second level higher than the first level, and a controller for controlling these components. In this case, the controller estimates the noise at the second level from the voice signal received by the noise obtaining microphone 424, eliminates the noise at the first level from the voice signal received by the voice obtaining microphone 422 based on the estimated noise, and is able to perform an operation corresponding to the voice signal from which the noise at the first level has been eliminated.

The voice obtaining microphone 422 is disposed in a first distance from a noise source from which noise is generated, and the noise obtaining microphone 424 is disposed in a second distance from the noise source generating the noise. In this case, the first distance may be longer than the second distance. For instance, if the roller 410 is the noise source, the noise obtaining microphone 424 is disposed adjacent to the roller 410, while the voice obtaining microphone 422 is disposed on a region distant from the roller 410.

On an inner side of the body unit of the movable home robot, a seat recess having the voice obtaining microphone 422 seated thereon and a seat recess having the noise obtaining microphone 424 seated thereon can be disposed. In this case, regarding the seat recess, one side toward an inner direction of the body unit is sealed with a cover and a via hole opening into an external environment can be formed in the other side toward an outer direction of the body unit. And, the first seat recess having the voice obtaining microphone 422 seated thereon can be filled up with a sound absorbing material. Moreover, regarding the seat recess having the noise obtaining microphone 424 seated thereon, one side toward an inner direction of the body unit is open but the other side toward an outer direction of the body unit may be closed. In this case, the open direction of one side of the seat recess may face the noise source from which noise is generated. For instance, if the noise source is the roller 410, the open direction of one side of the seat recess may face the roller 410 from which the noise is generated.

Therefore, the voice obtaining microphone 422 can minimize the reception of noises generated internally. And, the noise obtaining microphone 424 can maximize the reception of noises generated internally.

Meanwhile, when a multitude of voice obtaining microphones are provided, an electronic device can eliminate a noise at a first level from a voice signal received by a previously specified voice obtaining microphone among a multitude of the voice obtaining microphones. In this case, the previously specified voice obtaining microphone may include a voice obtaining microphone farthest from a noise source for generating noise.

Moreover, when a multitude of voice obtaining microphones are provided, an electronic device can eliminate a noise at a first level from a voice signal received by a voice obtaining microphone having a lowest noise level as a result from comparing voice signals received from a multitude of the voice obtaining microphones.

Moreover, in a case not forming part of the invention, when a multitude of noise obtaining microphones are provided, an electronic device can estimate a noise at a second level from a voice signal received by a previously specified noise obtaining microphone among a multitude of the noise obtaining microphones. In this case, the previously specified voice obtaining microphone may include a voice obtaining microphone located closest to a noise source for generating noise.

In some cases not forming part of the invention, when a multitude of noise obtaining microphones are provided, an electronic device can estimate a noise at a second level from a voice signal received by a noise obtaining microphone having a highest noise level as a result from comparing voice signals received from a multitude of the noise obtaining microphones.

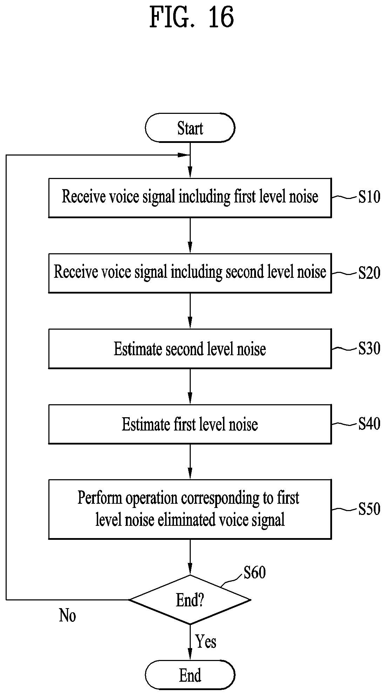

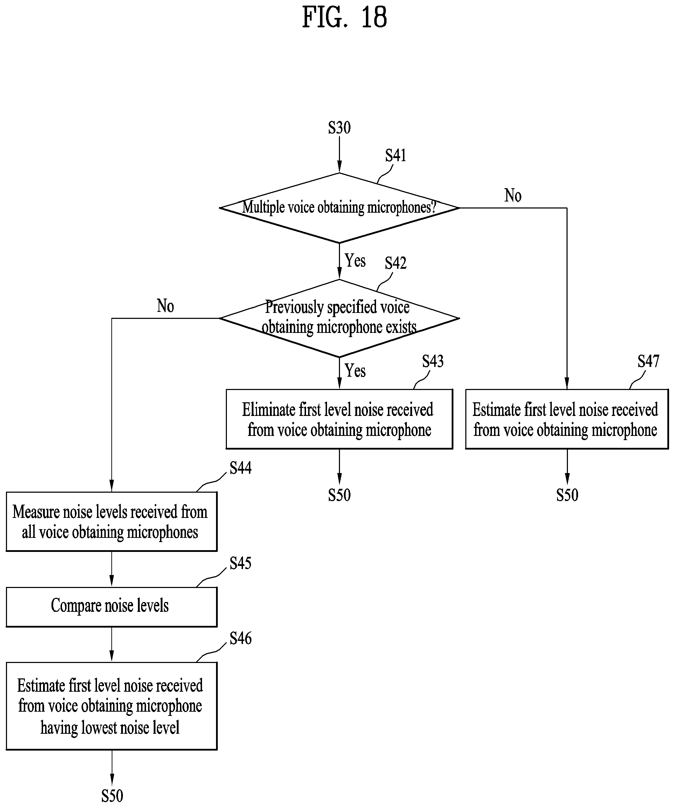

FIGs. 16 to 18 are flowcharts to describe a noise eliminating method of an electronic device.

Referring to FIGs. 16 to 18, a controller of an electronic device receives a voice signal including a noise at a first level from a voice obtaining microphone [S10].

The controller receives a voice signal including a noise at a second level higher than the first level from a noise obtaining microphone [S20].

The controller estimates the noise at the second level from the voice signal received by the noise obtaining microphone [S30].

Based on the estimated noise, the controller eliminates the noise at the first level from the voice signal received by the voice obtaining microphone [S40].

The controller can perform an operation corresponding to the voice signal from which the noise at the first level has been eliminated [S50].

Subsequently, if receiving an end request, the controller ends all operations [S60].

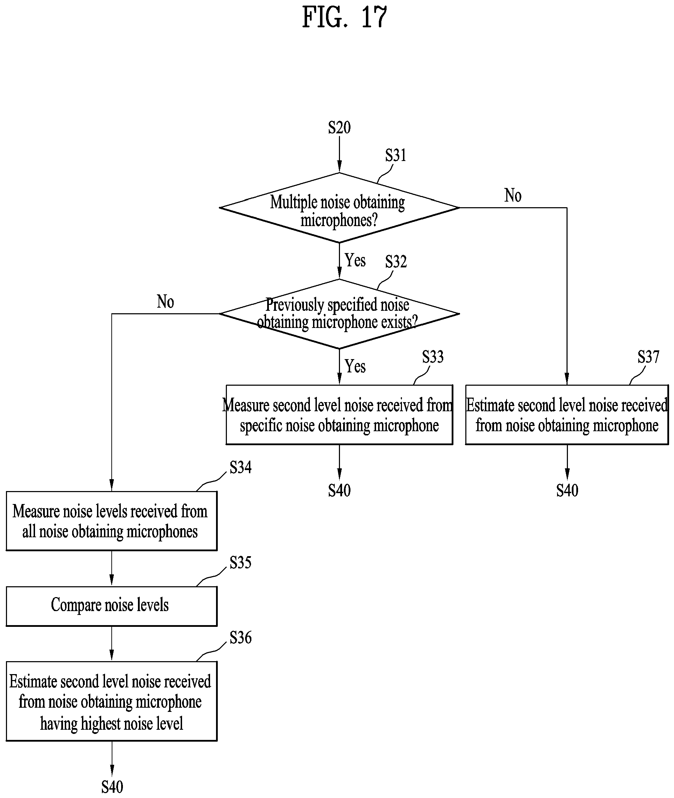

Meanwhile, in a case not forming part of the invention, when a multitude of noise obtaining microphones are provided, as shown in FIG. 17, the controller receives the voice signal including the noise at the second level higher than the first level from the noise obtaining microphone [S20] and then checks whether a multitude of the noise obtaining microphones are provided [S31].

If a multitude of the noise obtaining microphones are provided, the controller checks whether a previously specified noise obtaining microphone exists among a multitude of the noise obtaining microphones [S32].

If the previously specified noise obtaining microphone exists, the controller estimates the noise at the second level from the voice signal received by the previously specified noise obtaining microphone [S33].

In the step S32 of checking whether a previously specified noise obtaining microphone exists among a multitude of the noise obtaining microphones, if the previously specified noise obtaining microphone fails to exist, the controller measures noise levels from voice signals received from a multitude of the noise obtaining microphones [S34].

The controller compares the noise levels of the voice signals received from a multitude of the noise obtaining microphones [S35].

As a result of the comparison, the controller estimates the noise at the second level from the voice signal received by the noise obtaining microphone having a highest noise level [S36].

Meanwhile, in a case not forming part of the invention, when a multitude of voice obtaining microphones are provided, the controller estimates the noise at the second level from the voice signal received by the noise obtaining microphone [S30] and then checks whether a multitude of voice obtaining microphones are provided [S41].

If a multitude of the voice obtaining microphones are provided, the controller checks a previously specified voice obtaining microphone exists among a multitude of the voice obtaining microphones [S42].

If the previously specified voice obtaining microphone exists, the controller eliminates the noise at the first level from the voice signal received by the previously specified voice obtaining microphone based on the estimated noise [S43].

In the step S42 of checking whether the previously specified voice obtaining microphone exists among a multitude of the voice obtaining microphones, if the previously specified voice obtaining microphone fails to exist, the controller measures noise levels from voice signals received from a multitude of the voice obtaining microphones [S44].

The controller compares the noise levels measured from the voice signals received from a multitude of the voice obtaining microphones [S45].

As a result of the comparison, the controller eliminates the noise at the first level from the voice signal received by the noise obtaining microphone having the lowest noise level [S46].

As described above, the present invention can effectively eliminate a noise of a voice signal received from a voice obtaining microphone by increasing a signal to noise ratio in a manner of disposing a noise obtaining microphone near a noise source, thereby improving a remote voice recognition rate.

Also, the present invention can raise a voice recognition rate in a manner of eliminating a noise of a voice signal having a smallest noise level in case of a presence of a multitude of voice obtaining microphones, thereby improving reliability on an execution operation according to a voice command.

Alto, the present invention can raise a voice recognition rate in a manner of estimating a nose of a voice signal at a highest noise level and then eliminating a noise of a voice signal received from a voice obtaining microphone in case of a presence of a multitude of voice obtaining microphones, thereby improving reliability on an execution operation according to a voice command.

Also, the present invention can eliminate a noise of a voice signal in a manner of increasing a signal-to-noise ratio by rotating to move a noise obtaining microphone in a direction of a noise source having a greatest noise generated therefrom using a rotation frame having a noise obtaining microphone and the voice obtaining microphone disposed therein.

And, the present invention can eliminate a noise of a voice signal in a manner of increasing a signal-to-noise ratio by rotating to move a noise obtaining microphone in a direction of a noise source having a noise generated therefrom due to vibration by disposing a vibration sensor.

Although embodiments have been described with reference to a number of illustrative embodiments thereof, it should be understood that numerous other modifications and embodiments can be devised by those skilled in the art that will fall within scope of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller of the electronic device.

### MODE OF INVENTION

A variety of the embodiments have been described in the best mode above to carry out the present invention.

### INDUSTRIAL APPLICABILITY

The present invention is used in areas related to electronic devices that can perform functions or actions according to voice commands entered through the microphone.

It is self-evident to one having an ordinary skill in the art that various modifications and variations are possible in this invention without exceeding the scope of the invention as defined by the appended claims. Therefore, this invention is intended to include any changes and modifications to this invention that are provided within the attached terms and equivalent.

## Claims

1. An electronic device, comprising:
a voice obtaining microphone (322) configured to receive a voice signal including a noise at a first level;
a noise obtaining microphone (324) configured to receive a voice signal including a noise at a second level higher than the first level;
a controller (180) configured to:
estimate the noise at the second level from the voice signal received by the noise obtaining microphone (324),
remove the noise at the first level from the voice signal received by the voice obtaining microphone (322) based on the estimated noise, and
perform an operation corresponding to the voice signal having the noise at the first level eliminated therefrom;
a body unit (350) forming an exterior of the electronic device; and
a rotational frame (390) configured to rotate along a circumference of the body unit (350) by being coupled with the body unit (350),
wherein a first seat recess (352') having the voice obtaining microphone (322) seated thereon and a second seat recess (355') having the noise obtaining microphone (324) seated thereon are disposed in the rotational frame (390), and
wherein the controller (180) is further configured to move the noise obtaining microphone (324) in a direction having a highest noise level by rotating the rotational frame (390) based on a noise level of the voice signal received from the noise obtaining microphone (324)
**characterized in that** the voice obtaining microphone (322) is configured as a multitude of voice obtaining microphones (322a, 322b, 322c) disposed at prescribed distances from each other
wherein the electronic device is configured to move,
wherein if the electronic device (100) moves, the controller (180) is further configured to remove the noise at the first level from the voice signal received by a preset specific voice obtaining microphone (322) among the multitude of the voice obtaining microphones (322a, 322b, 322c), and to perform the operation corresponding to the voice signal having the noise at the first level eliminated therefrom, and
wherein if the electronic device stops, the controller is further configured to perform the operation corresponding to the voice signal received by a prescribed one of the multitude of the voice obtaining microphones (322a, 322b, 322c) except the specific voice obtaining microphone.

2. The electronic device of claim 1, wherein the voice obtaining microphone (322) is disposed in a first distance from a noise source generating the noise,
wherein the noise obtaining microphone (324) is disposed in a second distance from the noise source generating the noise, and
wherein the first distance is longer than the second distance.

3. The electronic device of claim 1, wherein one side of the first seat recess (352') toward an inner direction of the body unit (350) of the preset specific voice obtaining microphone is sealed with a cover (380), and wherein a via hole (370) is formed in another side of the first seat recess (352') toward an outer direction of the body unit (350).

4. The electronic device of claim 3, wherein the first seat recess (352') of the preset specific voice obtaining microphone is filled with a sound absorbing material (360).

5. The electronic device of claim 1, wherein one side of the second seat recess (355') toward an inner direction of the body unit (350) is open, and wherein another side of the second seat recess (355') toward an outer direction of the body unit (350) is closed.

6. The electronic device of claim 5, wherein an open direction of the one side of the second seat recess (355') faces a noise source (315) generating the noise.

7. The electronic device of claim 1, wherein the multitude of the voice obtaining microphones (322a, 322b, 322c) are disposed in equal distances from each other.

8. The electronic device of claim 1, wherein the controller (180) is further configured to rotate the rotational frame (390) having the noise obtaining microphone (324) disposed therein,
wherein each time the noise obtaining microphone (324) is rotationally moved by a prescribed distance, the controller (180) is further configured to measure a noise level from the voice signal received by the noise obtaining microphone (324), and
wherein if one rotational operation of the rotational frame (390) is completed, the controller (180) is further configured to rotationally move the noise obtaining microphone (324) in a direction having a highest noise level based on the measured noise level.

9. The electronic device of claim 1, further comprising:
a vibration sensor (395) configured to sense vibration of the body unit (350) by being disposed in the body unit (350),
wherein the controller (180) is further configured to move the noise obtaining microphone (324) as close as possible to a moving unit (310) configured to move the electronic device, by rotating the rotational frame (390) based on a vibration strength sensed by the vibration sensor (395);
wherein if the vibration strength is equal to or greater than a preset reference, the controller (180) is further configured to move the noise obtaining microphone (324) to the moving unit (310), and
wherein if the vibration strength is smaller than the preset reference, the controller (180) is further configured to ignore the sensed vibration strength.

10. The electronic device of claim 9, wherein the moving unit (310) comprises at least one roller (310a, 310b).

## Patentansprüche

1. Elektronische Vorrichtung, die Folgendes umfasst:
ein Spracherfassungsmikrofon (322), das konfiguriert ist, ein Sprachsignal zu empfangen, das ein Rauschen mit einem ersten Pegel enthält;
ein Rauscherfassungsmikrofon (324), das konfiguriert ist, ein Sprachsignal zu empfangen, das ein Rauschen mit einem zweiten Pegel, der höher als der erste Pegel ist, enthält;
eine Steuereinheit (180), die konfiguriert ist zum:
Schätzen des Rauschens mit dem zweiten Pegel aus dem Sprachsignal, das durch das Rauscherfassungsmikrofon (324) erhalten wird,
Entfernen des Rauschens mit dem ersten Pegel aus dem Sprachsignal, das durch das Spracherfassungsmikrofon (322) empfangen wird, auf der Grundlage des geschätzten Rauschens, und
Durchführen eines Vorgangs, der dem Sprachsignal entspricht, aus dem das Rauschen mit dem ersten Pegel beseitig worden ist;
eine Körpereinheit (350), die eine Außenseite der elektronischen Vorrichtung bildet; und
einen Drehrahmen (390), der konfiguriert ist, sich entlang eines Umfangs der Körpereinheit (350) zu drehen, indem er mit der Körpereinheit (350) gekoppelt ist,
wobei eine erste Aufnahmevertiefung (352'), auf der das Spracherfassungsmikrofon (322) aufgenommen ist, und eine zweite Aufnahmevertiefung (355'), auf der das Rauscherfassungsmikrofon (324) aufgenommen ist, in dem Drehrahmen (390) angeordnet sind, und
wobei die Steuereinheit (180) ferner konfiguriert ist, das Rauscherfassungsmikrofon (324) in einer Richtung mit einem höchsten Rauschpegel zu bewegen, indem der Drehrahmen (390) auf der Grundlage eines Rauschpegels des Sprachsignals, das vom Rauscherfassungsmikrofon (324) empfangen wird, gedreht wird,
**dadurch gekennzeichnet, dass** das Spracherfassungsmikrofon (322) als eine Mehrzahl von Spracherfassungsmikrofonen (322a, 322b, 322c), die in vorgegebenen Abständen voneinander angeordnet sind, konfiguriert ist,
wobei die elektronische Vorrichtung konfiguriert ist, sich zu bewegen,
wobei dann, wenn sich die elektronische Vorrichtung (100) bewegt, die Steuereinheit (180) ferner konfiguriert ist, das Rauschen mit dem ersten Pegel aus dem Sprachsignal zu entfernen, das durch ein vorab eingestelltes, spezifisches Spracherfassungsmikrofon (322) aus der Mehrzahl von Spracherfassungsmikrofonen (322a, 322b, 322c) empfangen wird, und den Vorgang, der dem Sprachsignal entspricht, aus dem das Rauschen mit dem ersten Pegel beseitigt worden ist, durchzuführen, und
wobei dann, wenn die elektronische Vorrichtung anhält, die Steuereinheit ferner konfiguriert ist, den Vorgang, der dem Sprachsignal entspricht, das durch ein vorgegebenes der Mehrzahl der Spracherfassungsmikrofone (322a, 322b, 322c) mit Ausnahme des spezifischen Spracherfassungsmikrofons empfangen wird, durchzuführen.

2. Elektronische Vorrichtung nach Anspruch 1, wobei das Spracherfassungsmikrofon (322) in einem ersten Abstand von einer Rauschquelle, die das Rauschen erzeugt, angeordnet ist,
wobei das Rauscherfassungsmikrofon (324) in einem zweiten Abstand von der Rauschquelle, die das Rauschen erzeugt, angeordnet ist, und
wobei der erste Abstand größer als der zweite Abstand ist.

3. Elektronische Vorrichtung nach Anspruch 1, wobei eine Seite der ersten Aufnahmevertiefung (352') in Richtung einer Innenrichtung der Körpereinheit (350) des vorab eingestellten, spezifischen Spracherfassungsmikrofons mit einer Abdeckung (380) abgedichtet ist, und
wobei ein Durchgangsloch (370) in einer weiteren Seite der ersten Aufnahmevertiefung (325') in Richtung einer Außenrichtung der Körpereinheit (350) gebildet ist.

4. Elektronische Vorrichtung nach Anspruch 3, wobei die erste Aufnahmevertiefung (352') des vorab eingestellten, spezifischen Spracherfassungsmikrofons mit einem schallabsorbierenden Material (360) gefüllt ist.

5. Elektronische Vorrichtung nach Anspruch 1, wobei eine Seite der zweiten Aufnahmevertiefung (355') in Richtung einer Innenrichtung der Körpereinheit (350) offen ist, und
wobei eine weitere Seite der zweiten Aufnahmevertiefung (355') in Richtung einer Außenrichtung der Körpereinheit (350) geschlossen ist.

6. Elektronische Vorrichtung nach Anspruch 5, wobei eine Öffnungsrichtung der einen Seite der zweiten Aufnahmevertiefung (355') einer Rauschquelle (315), die das Rauschen erzeugt, zugewandt ist.

7. Elektronische Vorrichtung nach Anspruch 1, wobei die Mehrzahl der Spracherfassungsmikrofone (322a, 322b, 322c) in gleichen Abständen voneinander angeordnet sind.

8. Elektronische Vorrichtung nach Anspruch 1, wobei die Steuereinheit (180) ferner konfiguriert ist, den Drehrahmen (390), in dem das Rauscherfassungsmikrofon (324) angeordnet ist, zu drehen,
wobei jedes Mal, wenn das Rauscherfassungsmikrofon (324) um einen vorgegebenen Abstand drehend bewegt wird, die Steuereinheit (180) ferner konfiguriert ist, einen Rauschpegel von dem Sprachsignal, das durch das Rauscherfassungsmikrofon (324) empfangen wird, zu messen, und
wobei dann, wenn ein Drehvorgang des Drehrahmens (390) abgeschlossen ist, die Steuereinheit (180) ferner konfiguriert ist, das Rauscherfassungsmikrofon (324) auf der Grundlage des gemessenen Rauschpegels in einer Richtung mit dem höchsten Rauschpegel drehend zu bewegen.

9. Elektronische Vorrichtung nach Anspruch 1, die ferner Folgendes umfasst:
einen Schwingungssensor (395), der konfiguriert ist, eine Schwingung der Körpereinheit (350) zu erfassen, indem er in der Körpereinheit (350) angeordnet ist,
wobei die Steuereinheit (180) ferner konfiguriert ist, das Rauscherfassungsmikrofon (324) so nahe wie möglich an eine Bewegungseinheit (310), die konfiguriert ist, die elektronische Vorrichtung zu bewegen, zu bewegen, indem der Drehrahmen (390) auf der Grundlage einer Schwingungsstärke, die durch den Schwingungssensor (395) erfasst wird, gedreht wird;
wobei dann, wenn die Schwingungsstärke größer oder gleich einer vorab eingestellten Referenz ist, die Steuereinheit (180) ferner konfiguriert ist, das Rauscherfassungsmikrofon (324) zur Bewegungseinheit (310) zu bewegen, und
wobei dann, wenn die Schwingungsstärke kleiner als die vorab eingestellte Referenz ist, die Steuereinheit (180) ferner konfiguriert ist, die erfasste Schwingungsstärke zu ignorieren.

10. Elektronische Vorrichtung nach Anspruch 9, wobei die Bewegungseinheit (310) mindestens eine Rolle (310a, 310b) umfasst.

## Revendications

1. Dispositif électronique, comportant :
un microphone d'acquisition de voix (322) configuré pour recevoir un signal vocal incluant un bruit à un premier niveau ;
un microphone d'acquisition de bruit (324) configuré pour recevoir un signal vocal incluant un bruit à un second niveau plus élevé que le premier niveau ;
une commande (180) configurée pour :
estimer le bruit au second niveau à partir du signal vocal reçu par le microphone d'acquisition de bruit (324),
retirer le bruit au premier niveau du signal vocal reçu par le microphone d'acquisition de voix (322) sur la base du bruit estimé, et
exécuter une opération correspondant au signal vocal ayant le bruit au premier niveau éliminé de celui-ci ;
une unité de corps (350) formant un extérieur du dispositif électronique ; et
un châssis rotatif (390) configuré pour tourner le long d'une circonférence de l'unité de corps (350) en étant couplé à l'unité de corps (350),
dans lequel un premier évidement d'appui (352') ayant le microphone d'acquisition de voix (322) en appui sur celui-ci et un second évidement d'appui (355') ayant le microphone d'acquisition de bruit (324) en appui sur celui-ci sont disposés dans le châssis rotatif (390), et
dans lequel la commande (180) est en outre configurée pour déplacer le microphone d'acquisition de bruit (324) dans une direction ayant un niveau de bruit le plus élevé en faisant tourner le châssis rotatif (390) sur la base d'un niveau de bruit du signal vocal reçu du microphone d'acquisition de bruit (324)
**caractérisé en ce que** le microphone d'acquisition de voix (322) est configuré comme une multitude de microphones d'acquisition de voix (322a, 322b, 322c) disposés à des distances prescrites les uns des autres
dans lequel le dispositif électronique est configuré pour se déplacer,
dans lequel si le dispositif électronique (100) se déplace, la commande (180) est en outre configurée pour retirer le bruit au premier niveau du signal vocal reçu par un microphone d'acquisition de voix (322) spécifique prédéfini parmi la multitude de microphones d'acquisition de voix (322a, 322b, 322c), et pour exécuter l'opération correspondant au signal vocal ayant le bruit au premier niveau éliminé de celui-ci, et
dans lequel si le dispositif électronique s'arrête, la commande est en outre configurée pour exécuter l'opération correspondant au signal vocal reçu par un microphone prescrit de la multitude de microphones d'acquisition de voix (322a, 322b, 322c) à l'exception du microphone d'acquisition de voix spécifique.

2. Dispositif électronique selon la revendication 1, dans lequel le microphone d'acquisition de voix (322) est disposé à une première distance d'une source de bruit générant le bruit,
dans lequel le microphone d'acquisition de bruit (324) est disposé à une seconde distance de la source de bruit générant le bruit, et
dans lequel la première distance est plus longue que la seconde distance.

3. Dispositif électronique selon la revendication 1, dans lequel un côté du premier évidement d'appui (352') vers une direction intérieure de l'unité de corps (350) du microphone d'acquisition de voix spécifique prédéfini est scellé avec un couvercle (380), et
dans lequel un trou d'interconnexion (370) est formé dans un autre côté du premier évidement d'appui (352') vers une direction extérieure de l'unité de corps (350).

4. Dispositif électronique selon la revendication 3, dans lequel le premier évidement d'appui (352') du microphone d'acquisition de voix spécifique prédéfini est rempli d'un matériau acoustiquement absorbant (360).

5. Dispositif électronique selon la revendication 1, dans lequel un côté du second évidement d'appui (355') vers une direction intérieure de l'unité de corps (350) est ouvert, et
dans lequel un autre côté du second évidement d'appui (355') vers une direction extérieure de l'unité de corps (350) est fermé.

6. Dispositif électronique selon la revendication 5, dans lequel une direction d'ouverture du côté du second évidement d'appui (355') est dirigée vers une source de bruit (315) générant le bruit.

7. Dispositif électronique selon la revendication 1, dans lequel les microphones de la multitude de microphones d'acquisition de voix (322a, 322b, 322c) sont disposés à des distances égales les uns des autres.

8. Dispositif électronique selon la revendication 1, dans lequel la commande (180) est en outre configurée pour faire tourner le châssis rotatif (390) ayant le microphone d'acquisition de bruit (324) disposé dans celui-ci,
dans lequel chaque fois que le microphone d'acquisition de bruit (324) est déplacé en rotation d'une distance prescrite, la commande (180) est en outre configurée pour mesurer un niveau de bruit à partir du signal vocal reçu par le microphone d'acquisition de bruit (324), et
dans lequel si l'opération de rotation du châssis rotatif (390) est terminée, la commande (180) est en outre configurée pour déplacer en rotation le microphone d'acquisition de bruit (324) dans une direction ayant un niveau de bruit le plus élevé sur la base du niveau de bruit mesuré.

9. Dispositif électronique selon la revendication 1, comportant en outre :
un capteur de vibrations (395) configuré pour détecter des vibrations de l'unité de corps (350) en étant disposé dans l'unité de corps (350),
dans lequel la commande (180) est en outre configurée pour déplacer le microphone d'acquisition de bruit (324) aussi près que possible d'une unité mobile (310) configurée pour déplacer le dispositif électronique, en faisant tourner le châssis rotatif (390) sur la base d'une résistance aux vibrations détectée par le capteur de vibrations (395) ;
dans lequel si la résistance aux vibrations est égale ou supérieure à une référence prédéfinie, la commande (180) est en outre configurée pour déplacer le microphone d'acquisition de bruit (324) jusqu'à l'unité mobile (310), et
dans lequel si la résistance aux vibrations est inférieure à la référence prédéfinie, la commande (180) est en outre configurée pour ignorer la résistance aux vibrations détectée.

10. Dispositif électronique selon la revendication 9, dans lequel l'unité mobile (310) comporte au moins une roulette (310a, 310b).
